## Europäisches Patentamt
## European Patent Office
## Office européen des brevets

(19)

(11) Veröffentlichungsnummer: **0 092 135**
**B1**

(12)

# EUROPÄISCHE PATENTSCHRIFT

(45) Veröffentlichungstag der Patentschrift:
23.09.87

(51) Int. Cl.⁴: **F 16 G 15/00**

(21) Anmeldenummer: **83103506.8**

(22) Anmeldetag: **12.04.83**

(54) Verkürzungsklaue für Gliederkettenstränge.

(30) Priorität: **15.04.82 DE 3213906**

(43) Veröffentlichungstag der Anmeldung:
**26.10.83 Patentblatt 83/43**

(45) Bekanntmachung des Hinweises auf die Patenterteilung:
**23.09.87 Patentblatt 87/39**

(84) Benannte Vertragsstaaten:
**BE DE FR IT NL**

(56) Entgegenhaltungen:
**DE-A-2 433 345**
**DE-A-2 712 605**
**FR-A-403 123**
**FR-A-2 236 121**

(73) Patentinhaber: **Becker- Prünte GmbH, August- Becker- Strasse 10, D-4354 Datteln Westfalen (DE)**

(72) Erfinder: **Rast, Jürgen, Erfurter Strasse 34, D-4620 Castrop- Rauxel (DE)**

(74) Vertreter: **Herrmann- Trentepohl, Werner, Dipl.- Ing., Schaeferstrasse 18, D-4690 Herne 1 (DE)**

EP 0 092 135 B1

## Beschreibung

Die Erfindung betrifft eine Verkürzungsklaue für Gliederkettenstränge gemäß dem Oberbegriff des Anspruchs 1.

Verkürzungsklauen, auch als Klauenhaken oder Kettenkrallen bekannt, finden überwiegend zum Verzurren von Transportgütern Anwendung. Als nachteilig hat sich dabei herausgestellt, daß die Kette bei Entlastung aus der Verkürzungsklaue herausgleiten kann. Zur Vermeidung dieses Nachteiles wurden die Verkürzungsklauen bereits mit Elementen zur Lagesicherung des in die Taschen eingeführten Kettengliedes ausgerüstet. Diese Sicherungen erfordern bei der Montage und der Demontage einen relativ großen Kraftaufwand und können nicht in jedem Fall eine volle Funktionsfähigkeit gewährleisten.

Bei der aus der DE-A-24 33 345 bekannten Verkürzungsklaue erfolgt die Sicherung selbsttätig beim Einhängen des Kettenstranges. Ein Lösen des Kettenstranges von der Verkürzungsklaue ist nur durch rückartiges Herausziehen der Kettenglieder aus der Tasche gegen den Klemmwiderstand der Sicherung möglich. Die konstruktive Ausbildung der Sicherung ist aufwendig und störanfällig. Außerdem ist das Lösen des Kettenstranges kraftaufwendig. Die Kettenglieder selbst sind mit Spiel in der Verkürzungsklaue gelagert, so daß sie eine Bewegungsmöglichkeit besitzen. Dadurch wird eine Falschmontage nicht ausgeschlossen, d.h. es besteht die Möglichkeit, daß eine nicht zur Verkürzungsklaue gehörige Kette eingebaut werden kann.

Der Erfindung liegt daher die Aufgabe zugrunde, eine Verkürzungsklaue zu schaffen, in welche nur die jeweils zugehörige Kette eingebaut werden kann und das eingelegte Kettenglied gegen Herausgleiten aus der Tasche durch eine einfach zu betätigende Sicherung geschützt ist.

Erfindungsgemäß wird diese Aufgabe mit Hilfe der Merkmale des kennzeichnenden Teils des Anspruchs 1 gelöst.

Durch die erfindungsgemäße Verkürzungsklaue wird eine sichere Aufnahme der jeweils zugehörigen Kette bei bestmöglicher Anlagefläche in der Tasche erreicht und durch die formschlüssige Sicherung des Sicherungsstiftes ein schnelles und einfaches Lösen ermöglicht.

Es ist zweckmäßig, den Sicherungsstift in einer Zinke zu lagern, die das Kettenglied gegen seitliches Lösen sichert, nicht aber gegen ein Lösen nach vorn. Der Sicherungsstift kann dabei so angeordnet sein, daß er annähernd rechtwinklig über die Oberfläche des Kettengliedes ragt. In Ausgestaltung der Erfindung arretiert der Sicherungsstift gegen Federkraft und sichert somit immer die eingelegte Kette gegen ein Herausgleiten aus der Tasche. Bei der Herausnahme der Kette aus der Tasche muß der Sicherungsstift durch Druck entsichert werden und geht danach von selbst wieder in die Sperrstellung zurück. Um das Einlegen der Kette zu vereinfachen, ist vorteilhafterweise der Sicherungsstift mit einer einseitigen, nach außen weisenden Anschrägung versehen, gegen welche das Kettenglied beim Einlegen gedrückt wird. Die Höhe der Zinken kann annähernd dem Durchmesser der Kettenglieder entsprechen.

Ein Ausführungsbeispiel der Erfindung ist in der Zeichnung dargestellt und wird im folgenden näher beschrieben. Es zeigen:

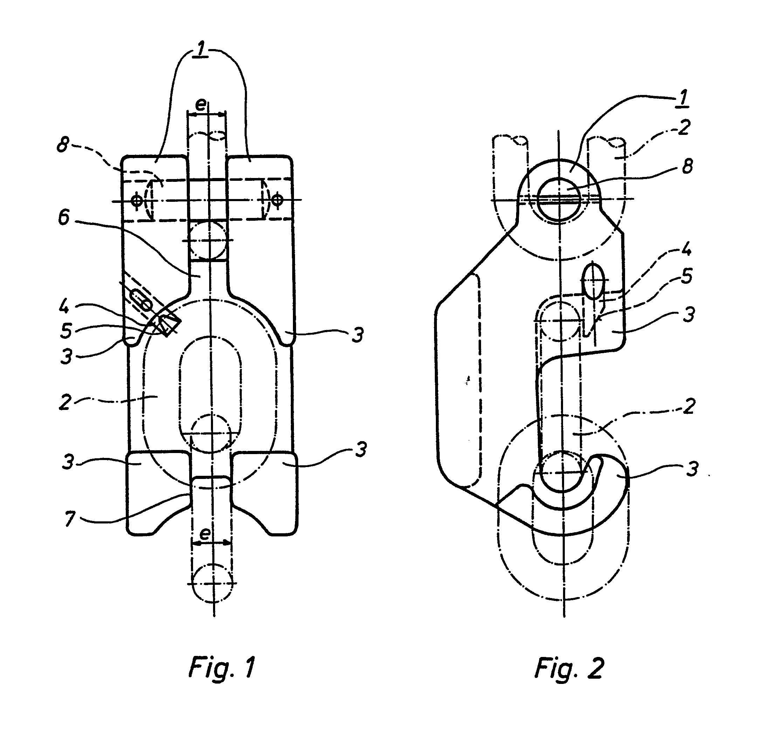

Fig. 1 die Ansicht einer Verkürzungsklaue mit angedeuteten Kettengliedern und
Fig. 2 die Seitenansicht einer Verkürzungsklaue mit angedeuteten Kettengliedern.

Die Verkürzungsklaue besteht aus zwei im Abstand e parallel nebeneinander angeordneten und miteinander verbundenen Haken 1. Der Abstand e entspricht annähernd dem Durchmesser der Kettenglieder 2. Die Verkürzungsklaue besitzt dadurch verwechslungsfreie Gabelanschlüsse 6; 7, so daß nur die zugehörige Kette eingebaut werden kann. Im Gabelanschluß 6 ist ein zylindrischer Bolzen 8 zur Aufnahme eines Kettengliedes 2 gelagert. Der Bolzen 8 wird an den Enden durch Schwerspannstifte justiert, so daß keine Kerbgefahr des Bolzens gegeben ist. Eine Flaschmontage wird dadurch vermieden, daß der Durchmesser des Bolzens 8 den Einbau der nächstkleineren Kette und der Durchlaß in der Gabel 6 den Einbau der nächstgrößeren Kette verhindert.

Die Verkürzungsklaue wird gesenkgeschmiedet und dabei die den Umrissen des Kettengliedes 2 angepaßte Tasche zur sicheren Aufnahme des Kettengliedes 2 mit eingeschmiedet. Die Innenflächen der Zinken 3 sind dem Profil des einzulegenden Kettengliedes 2 angepaßt, wobei die Zinken 3 paarweise um 90° zueinander versetzt angeordnet sind. Zur formschlüssigen Sicherung des in die Tasche eingeführten Kettengliedes 2 dient ein federnd gelagerter Sicherungsstift 4, der annähernd rechtwinklig über die Oberfläche des Kettengliedes 2 ragt und in einer Zinke 3 gelagert ist. Der Sicherungsstift 4 arretiert gegen Federkraft. Ein Herausnehmen des Kettengliedes 2 aus der Tasche ist nur dann möglich, wenn der Sicherungsstift 4 durch Druck entsichert ist. Bei Aufhebung des Drucks geht der Sicherungsstift 4 in die Sperrstellung zurück. Das Einlegen des Kettengliedes 2 in die Tasche erfolgt durch Druck gegen eine einseitig nach außen gerichtete Anschrägung 5 des Sicherungsstiftes 4.

## Patentansprüche

1. Verkürzungsklaue für Gliederkettenstränge, bestehend aus zwei im Abstand (e) parallel nebeneinander angeordneten und miteinander verbundenen Haken (1), die den Umrissen eines Kettengliedes (2) angepaßte, mit Zinken (3) versehene taschenartige Ausnehmungen aufweisen und in einem Endbereich ein zur Aufnahme eines Kettengliedes (2) dienender zylindrischer Bolzen (8) gelagert ist, sowie zur Lagesicherung des in der Tasche eingeführten Kettengliedes (2) eine sich beim Einhängen des Kettengliedes (2) selbsttätig wirkende Sicherung angeordnet ist, wobei der Abstand (e) der parallel nebeneinander angeordneten Haken (1) annähernd dem Durchmesser der Kettenglieder (2) entspricht und der Durchmesser des Bolzens (8) dem einzulegenden Kettenglied (2) angepaßt ist, dadurch gekennzeichnet, daß die zur Anlage des Kettengliedes (2) dienenden Innenflächen der Zinken (3) paarweise um 90° zueinander versetzt angeordnet sind, sowie zur formschlüssigen Sicherung des in die Tasche eingeführten Kettengliedes (2) ein federnd gelagerter Sicherungsstift (4) angeordnet ist.

2. Verkürzungsklaue nach Anspruch 1, dadurch gekennzeichnet, daß der Sicherungsstift (4) in einer Zinke (3) gelagert ist.

3. Verkürzungsklaue nach Anspruch 1 und 2, dadurch gekennzeichnet, daß der Sicherungsstift (4) annähernd rechtwinklig über die Oberfläche des Kettengliedes (2) ragt.

4. Verkürzungsklaue nach einem oder mehreren der Ansprüche 1 bis 3, dadurch gekennzeichnet, daß der Sicherungsstift (4) gegen Federkraft arretiert angeordnet ist.

5. Verkürzungsklaue nach einem oder mehreren der Ansprüche 1 bis 4, dadurch gekennzeichnet, daß der Sicherungsstift (4) eine einseitige, nach außen weisende Anschrägung (5) aufweist.

6. Verkürzungsklaue nach Anspruch 1, dadurch gekennzeichnet, daß die Höhe der Zinken (3) annähernd dem Durchmesser der Kettenglieder (2) entspricht.

## Claims

1. A shortening claw for chain-link cable, consisting of two hooks (1), disposed parallel, side-by-side, a distance (e) apart and joined together, which have pocket-like recesses fitting the outlines of a chain link (2) and prongs (3), a cylindrical bolt (8) serving to receive a chain link (2) being seated in an end area, and, in order to keep the chain link (2) which is received in the pocket safely in place, a safety device being fitted which operates automatically when the chain link (2) is inserted, wherein the distance (e) apart of the hooks (1) disposed parallel and side-by-side corresponds approximately to the diameter of the chain links (2), and the diameter of the bolt (8) is adapted to the chain link (2) which is to be inserted, characterised in that the inner faces of the prongs (3), which serve as bearing surfaces for the chain link (2), are arranged in pairs displaced by 90° relative to one another, and a securing pin (4) supported by spring pressure is provided in order to secure the chain link (2) which is inserted in the pocket by positive locking.

2. A shortening claw according to claim 1, characterised in that the securing pin (4) is seated in a prong (3).

3. A shortening claw according to claims 1 and 2, characterised in that the securing pin (4) protrudes approximately at right angles over the surface of the chain link (2).

4. A shortening claw according to one or more of claims 1 to 3, characterised in that the securing pin (4) is fitted in such a way as to be held against the force of a spring.

5. A shortening claw according to one or more of claims 1 to 4, characterised in that the securing pin (4) has a bevel (5) on one side facing outwards.

6. A shortening claw according to claim 1, characterised in that the height of the prongs (3) corresponds approximately to the diameter of the chain links (2).

## Revendications

1. Dispositif pour la réduction de la longueur d'une chaîne, constitué par deux crochets (1) parallèles, séparés l'un de l'autre d'une distance (e) et reliés l'un à l'autre, comprenant des évidements en forme de poches adaptés au pourtour d'un maillon (2) et munis de dents (3) et un boulon cylindrique (8) servant à l'accrochage d'un maillon (2) et monté dans une région d'extrémité, de même qu'un dispositif de retenue qui agit automatiquement quand on accroche le maillon (2) et qui est prévu pour la retenue dudit maillon (2) introduit dans la poche, la distance (e) entre les crochets disposés parallèlement l'un près de l'autre correspondant approximativement au diamètre du maillon (2) et le diamètre du boulon (8) étant adapté au maillon (2) à y accrocher, dispositif caractérisé en ce que les surfaces internes des dents (3) qui servent à l'appui du maillon (2) sont décalées par paires les unes par rapport aux autres de 90°, en ce qu'une tige de retenue (4) montée élastiquement est prévue pour la retenue par conjugaison de formes du maillon (2) introduit dans la poche.

2. Dispositif pour la réduction de longueur d'une chaîne selon la revendication 1, caractérisé en ce que la tige de retenue (4) est montée dans une dent (3).

3. Dispositif pour la réduction de longueur d'une chaîne selon les revendications 1 et 2, caractérisé en ce que la tige de retenue (4) fait saillie, de façon approximativement perpendiculaire, au-dessus de la surface du maillon (2).

4. Dispositif pour la réduction de longueur d'une chaîne selon une ou plusieurs des revendications 1 à 3, caractérisé en ce que la tige de retenue (4) est montée de manière à être bloquée élastiquement.

5. Dispositif pour la réduction de longueur

5      **0 092 135**      6

d'une chaîne selon une ou plusieurs des revendications 1 à 4, caractérisé en ce que la tige de retenue (4) comprend un biseau (5) sur un côté tourné vers l'extérieur.

6. Dispositif pour la réduction de longueur d'une, chaîne selon la revendication 1, caractérisé en ce que la hauteur des dents (3) correspond approximativement au diamètre des maillons (2).

4

Fig. 1

Fig. 2